# EUROPÄISCHE PATENTANMELDUNG

(11) **EP 2 960 553 A1**
(43) Veröffentlichungstag der Anmeldung: **30.12.2015**
(21) Anmeldenummer: 15401055.7
(22) Anmeldetag: 01.06.2015
(51) Int. Cl.: F16J 13/08, B65D 90/10

(54) **VERSCHLUSSDECKEL**

(30) Priorität: 24.06.2014 DE 102014108787
(71) Anmelder: Amazonen-Werke H. Dreyer GmbH & Co. KG, 49205 Hasbergen (DE)
(72) Erfinder: Austermann, Stefan, 48291 Telgte (DE); Müller, Norbert, 53175 Bonn (DE)

(57) **Zusammenfassung**

Verschlussdeckel (3) mittels dem die Öffnung, insbesondere Einfüllöffnung und/oder Mannloch eines Großbehälters, insbesondere Flüssigkeitstank einer landwirtschaftlichen Pflanzenschutzspritze abdichtend zu verschließen ist, wobei an dem Verschlussdeckel eine Verriegelungseinrichtung, die mehrere von einem Betätigungselement (12) zu betätigende Verriegelungselemente (7) aufweist, zum Verriegeln des Deckels in seiner die Öffnung in abdichtender Weise verschließenden Position vorgesehen ist, wobei die Verriegelungselemente in ihrer Verriegelungsposition in Aussparungen (18), die in der Wand der Behälteröffnung angeordnet sind, eingreifen, dadurch gekennzeichnet, dass die Verriegelungselemente jeweils als mittels einer Gelenkverbindung (9) auf der flächigen Seite des Deckels begrenzt verschwenkbar angeordnete zweiarmige Verriegelungshebel (8) ausgebildet sind.

## Beschreibung

Die Erfindung betrifft einen Verschlussdeckel gemäß des Oberbegriffes des Patentanspruches 1.

Ein Verschlussdeckel für die Einfüllöffnung eines Flüssigkeitstanks einer landwirtschaftlichen Pflanzenschutzspritze ist in der EP 1 637 473 A1 beschrieben. Problematisch ist bei derartigen Verschlussdeckeln, dass bei größeren Kräften, die von der Innenseite des Tanks durch hin und her schwankende Flüssigkeiten, die sich in dem Flüssigkeitstank befinden, auf den Verschlussdeckel einwirken, die Abdichtung der Verschlussdeckel gegenüber der Einfüllöffnung nicht ausreichend ist. Es tritt dann Flüssigkeiten nach außen oder der Verschlussdeckel wird von der Einfüllöffnung des Flüssigkeitstanks heruntergedrückt, weil die Verriegelung des Verschlussdeckels gegenüber dem Tank bzw. der Einfüllöffnung nicht ausreichend stabil ausgelegt ist.

Ein weiterer Verschlussdeckel ist in der DE 33 12 786 A1 beschrieben. Dieser Verschlussdeckel ist für Öffnungen von Druck-, Vakuum- oder Filterbehältern vorgesehen. Diesem Verschlussdeckel ist eine Verriegelungseinrichtung mit über eine Verriegelungseinrichtung, die mehrere von einem Betätigungselement zu betätigende Verriegelungselemente aufweist, zum Verriegeln des Deckels in seiner die Öffnung in Abdichten Der Weise verschließenden Position vorgesehen. Hierbei greifen die Verriegelungselementen in ihrer Verriegelungsposition in Aussparungen, die in der Wand der Behälteröffnung angeordnet sind, ein. Zu ihren Verstellen sind Verriegelungselemente in einer Schiebeführung angeordnet.

Der Erfindung liegt die Aufgabe zu Grunde, insbesondere für Großbehälter, wie für Flüssigkeitstanks bei Pflanzenschutzspritzen, eine einfach ausgestaltete Verriegelungseinrichtung zur sicheren Verriegelung und Abdichtung des Verschlussdeckels gegenüber der Einfüllöffnung des Flüssigkeitstanks zu schaffen.

Diese Aufgabewird erfindungsgemäß dadurch gelöst, dass die Verriegelungselemente jeweils als mittels einer Gelenkverbindung auf der flächigen Seite des Deckels begrenzt verschwenkbar angeordnete zweiarmige Verriegelungshebel ausgebildet sind.

Infolge dieser Maßnahme wird eine einfach ausgestaltete Verriegelungseinrichtung zur sicheren Abdichtung der Einfüllöffnung durch einen Verschlussdeckel geschaffen. Weiterhin zeichnet sich diese erfindungsgemäße Verriegelungseinrichtung für den Verschlussdeckel durch leicht und einfach zu bedienende Betätigungselemente aus. Durch die schwenkbar angeordneten zweiarmigen Verriegelungshebel ergibt sich eine robuste Konstruktion. Es lassen sich große Verriegelungskräfte zur sicheren Abdichtung des Verschlussdeckels gegenüber der Einfüllöffnung in einfacher Weise erzeugen.

Eine einfache Betätigung sowie robuste Ausgestaltung der Verriegelungshebel wird dadurch erreicht, dass die Verriegelungshebel auf ihrem der in die Aussparungen eingreifenden Seite abgewandten Ende mit einer begrenzten drehbar angeordneten Verstellscheibe der Verriegelungseinrichtung zusammenwirken.

Eine einfache Ausbildung der Verriegelungseinrichtung lässt sich dadurch erreichen, dass die Verstellscheibe über einen Gelenkbolzen mit dem Betätigungselement der Verriegelungseinrichtung verbunden ist.

Um die Verriegelungselemente vor äußeren Einflüssen, insbesondere vor von außen einwirkenden Kräften vor Beschädigungen zu schützen, ist vorgesehen, dass die Verriegelungselemente auf der dem Behälterinneren zugewandten Seite des Deckels angeordnet sind.

Um eine sichere Führung des Betätigungselementes bei dem Betätigungsvorgang der Verriegelungseinrichtung zu gewährleisten, ist vorgesehen, dass das Betätigungselement an einer an dem Außenrand des Deckels sich befindlichen Führungskante in umgreifender Weise geführt ist.

Ein einfaches Betätigen der Verriegelungshebel in die jeweilige Position durch die Verstellscheibe wird dadurch erreicht, dass an den mit der Verstellscheibe zusammenwirkenden Enden der Verriegelungshebel ein bolzenartiges Ansatzelement auf der der Verstellscheibe zugewandten Seite angeordnet ist, dass das jeweilige bolzenartige Ansatzelement in eine in der Verstellscheibe angeordnete längliche Betätigungsaussparung eingreift.

In einfacher Weise lassen sich die Verriegelungshebel dadurch in die jeweilige Position verstellen, dass die Verriegelungseinrichtung eine Schwenkeinrichtung zur Betätigung der als Verriegelungshebel ausgebildeten Verriegelungselemente aufweist.

Weitere Einzelheiten der Erfindung sind der Beispielsbeschreibung zu entnehmen. Die Zeichnungen zeigen
- Fig.1: den als Großbehälter ausgebildeten Flüssigkeitstank einer landwirtschaftlichen Pflanzenschutzspritze in perspektivischer Darstellung,
- Fig.2: den Verschlussdeckel für die Einfüllöffnung des Flüssigkeitstanks in geschlossener Position in perspektivischer Darstellung und vergrößertem Maßstab,

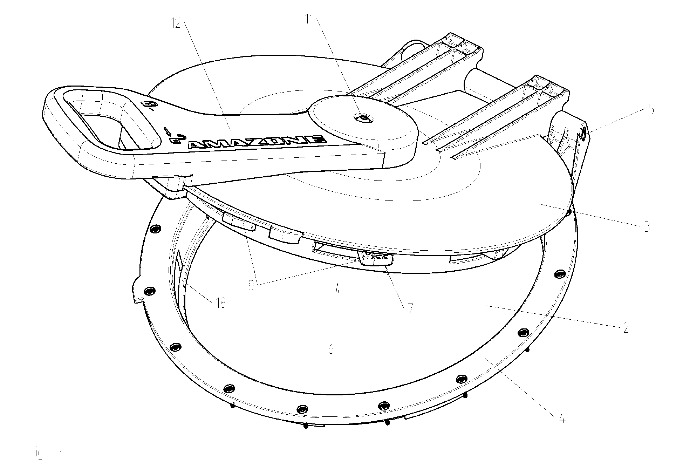

- Fig.3: den Verschlussdeckel für die Einfüllöffnung des Flüssigkeitstanks in geöffneter und in der ersten Phase des Aufklappens in perspektivischer Darstellung und vergrößertem Maßstab,
- Fig.4: den Verschlussdeckel für die Einfüllöffnung des Flüssigkeitstanks in aufgeklappter Position in perspektivischer Darstellung und vergrößertem Maßstab,
- Fig.5: den Verschlussdeckel für die Einfüllöffnung des Flüssigkeitstanks in Unteransicht, wobei sich die Verriegelungshebel in Entriegelungsposition befinden und
- Fig.6: den Verschlussdeckel für die Einfüllöffnung des Flüssigkeitstanks in Unteransicht, wobei sich die Verriegelungshebel in Verriegelungsposition befinden.

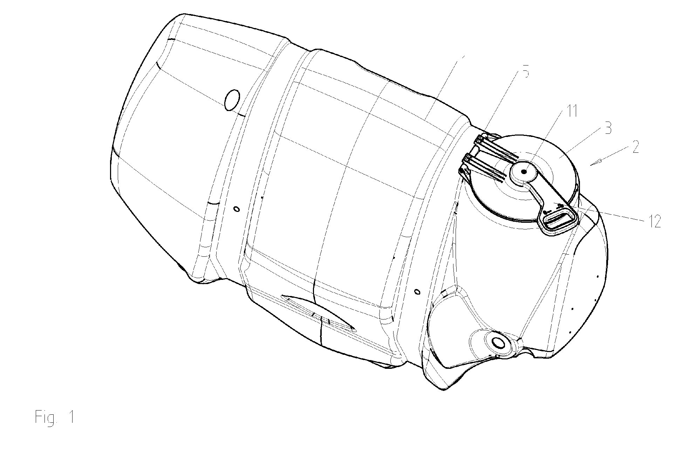

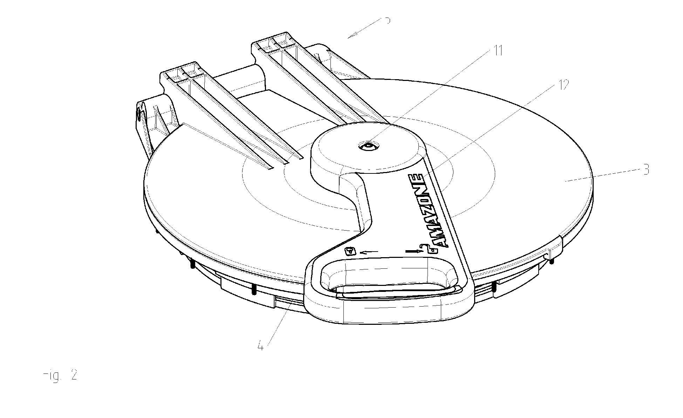

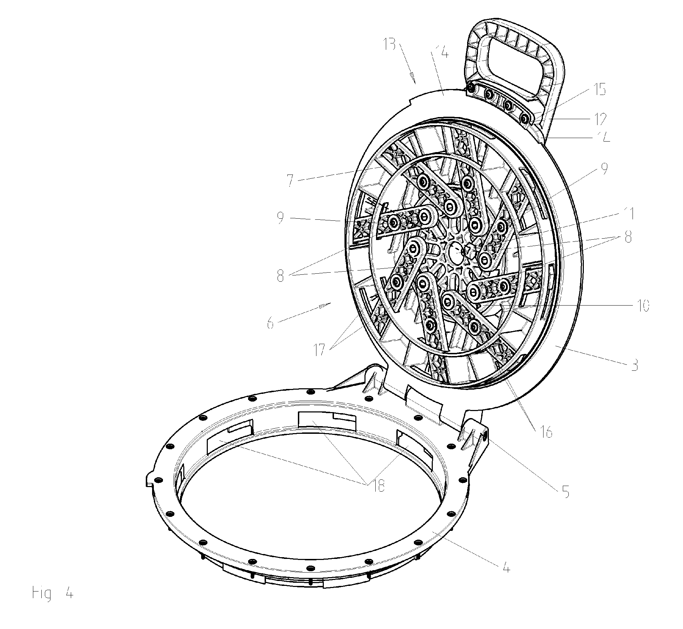

Der als Flüssigkeitstank 1 einer landwirtschaftlichen Pflanzenschutzspritze ausgebildete Großbehälter weist zumindest eine größere Öffnung 2, welche die Einfüllöffnung und/oder das Mannloch des Tanks 1 ist. Der Flüssigkeitstank 1 ist auf einem nicht dargestellten Transportrahmen in bekannter Weise angeordnet. Der Einfüllöffnung 2 ist ein Verschlussdeckel 3 zum abdichtenden Verschließen des Tanks 1 der Pflanzenschutzspritze zugeordnet. Hierzu ist in die Öffnung 2 des Tanks 1 ein Deckelrahmen 4 eingesetzt, der in abgedichteter mit der oberen Wand der Öffnung 2 des Tanks 1 in geeigneter Weise verbunden ist. Hierzu kann der Deckelrahmen 4 beispielsweise mit der oberen Wand der Öffnung 2 des Tanks 1 verschraubt sein. Mittels dieses Schwenkgelenkes 5 ist an diesem Deckelrahmen 4 der eigentliche Verschlussdeckel 3 angeordnet. Über das Schwenkgelenk 5 kann der Verschlussdeckel 3 in die die Einfüllöffnung 2 abdichtend verschließende Position, wie in den Fig. 1, 2, 5 und 6 dargestellt, und in eine die Einfüllöffnung 2 freigegebene Position, wie in der Fig. 4 dargestellt, entsprechend verschwenkt werden.

Um den Verschlussdeckel 3 sicher in seiner die Einfüllöffnung 2 abdichtend verschließenden Position zu sichern und zu verriegeln, sind auf der dem Tankinneren zugewandten Seite 6 des Verschlussdeckels 3 Verriegelungselemente 7 zum verriegeln des Deckels 3 in seiner die Öffnung 2 in abdichtender Weise verschließenden Position angeordnet. Die Verriegelungselemente 7 sind als begrenzt verschwenkbar angeordnete zweiarmige Verriegelungshebel 8 ausgebildet und mittels einer Gelenkverbindung 9 auf der flächigen, tankinneren Seite 6 des Deckels 3 an dem Deckel 3 angeordnet.

Zum Verschwenken der Verriegelungshebel 8 ist auf der tankinneren Seite 6 des Deckels 3 eine Verstellscheibe 10 angeordnet. Die Verstellscheibe 10 ist ein einem Gelenkbolzen 11 drehfest angeordnet. Der Gelenkbolzen 11 ist drehbar in abgedichteter Weise in einem in dem Deckel 3 angeordneten Durchbruch angeordnet. Auf der der Verstellscheibe 10 abgewandten Seite des Gelenkbolzens 11 ist das als Betätigungshebel 12 ausgebildete Betätigungselement drehfest angeordnetes. Dieser Betätigungshebel 12 ist als Schwenkeinrichtung zur Betätigung der als Verriegelungshebel 8 ausgebildeten Verriegelungselemente 7 ausgestaltet. An dem Außenrand 13 des Deckels 3 ist im Bereich der Anordnung des Betätigungshebels 12 eine Führungskante 14 angeordnet. Des Weiteren ist an dem Betätigungshebel auf der der Führungskante zugewandten Seite eine die Führungskante umgreifende Führungsschiene 15 angeordnet. Somit ist der Betätigungshebel 12 an der an dem Außenrand 13 des Deckels 3 sich befindlichen Führungskante 14 in um greifender Weise geführt.

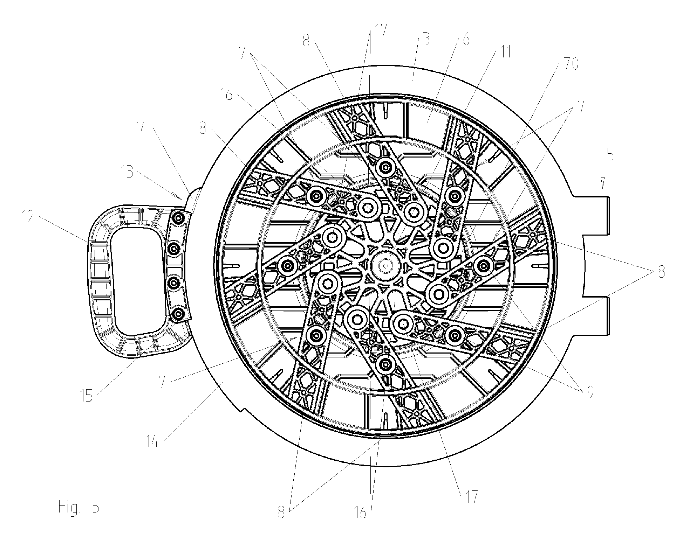

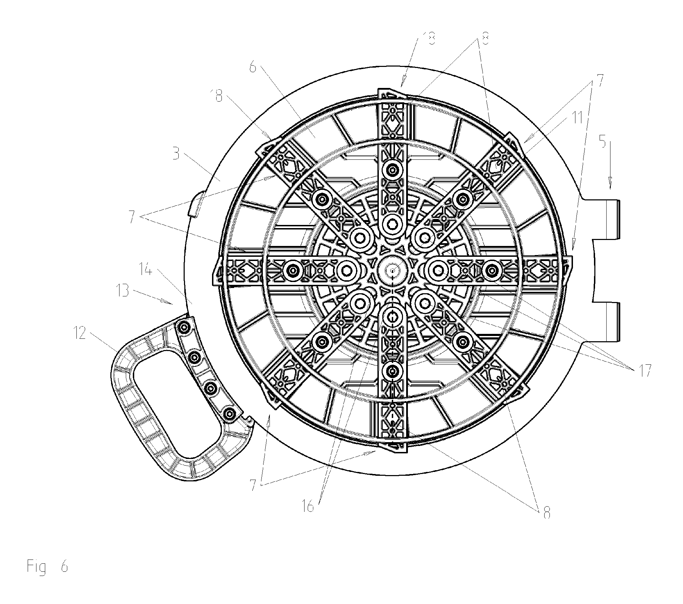

In der Verstellscheibe 10 ist im Bereich der Verriegelungshebel 8 jeweils eine längliche Betätigungsaussparung 16 angeordnet. An dem mit der Verstellscheibe 10 zusammenwirkenden Enden der Verriegelungshebel 8 ist jeweils ein bolzenartiges Ansatzelement 17, welches in die längliche Betätigungsaussparung 16 eingreift, auf der der Verstellscheibe 10 zugewandten Seite angeordnet. Durch das Verdrehen der Verstellscheibe 10 über den Betätigungshebel 12 werden die Verriegelungshebel 8 verschwenkt. Hierdurch lassen sich die Verriegelungshebel wahlweise zwischen der Verriegelungsposition gemäß Fig. 6 Entriegelungsposition gemäß Fig. 5 verschwenken. Um die Verriegelungshebel 8 mit dem Deckelrahmen 4 bzw. der Wand der Behälteröffnung 2 in verriegelnder Position zum Verriegeln des Deckels 3 zusammenwirken zu lassen, sind in dem Deckelrahmen 3 Aussparungen 18 angeordnet.

In ihrer Verriegelungsposition greifen die Verriegelungshebel 8 in diese Aussparungen 18 ein, die in der Wand des der Behälteröffnung 2 zugeordneten Deckelrahmens 4 angeordnet sind.

Durch die Vielzahl der Verriegelungshebel 8 wird eine sichere Verriegelung des Verschlussdeckels 3 in der die Öffnung bei verschließenden Position erreicht. Durch das vorgeschriebene Verschwenken der Verriegelungshebel 8 mittels des Betätigungshebels 12 wird eine einfache und robuste Betätigung der Verriegelungselemente 7 erreicht und gewährleistet.

## Patentansprüche

1. Verschlussdeckel mittels dem die Öffnung, insbesondere Einfüllöffnung und/oder Mannloch eines Großbehälters, insbesondere Flüssigkeitstank einer landwirtschaftlichen Pflanzenschutzspritze abdichtend zu verschließen ist, wobei an dem Verschlussdeckel eine Verriegelungseinrichtung, die mehrere von einem Betätigungselement zu betätigende Verriegelungselemente aufweist, zum Verriegeln des Deckels in seiner die Öffnung in abdichtender Weise verschließenden Position vorgesehen ist, wobei die Verriegelungselemente in ihrer Verriegelungsposition in Aussparungen, die in der Wand der Behälteröffnung angeordnet sind, eingreifen, **dadurch gekennzeichnet, dass** die Verriegelungselemente (7) jeweils als mittels einer Gelenkverbindung (5) auf der flächigen Seite des Deckels (3) begrenzt verschwenkbar angeordnete zweiarmige Verriegelungshebel (8) ausgebildet sind.

2. Verschlussdeckel nach Anspruch 1, **dadurch gekennzeichnet, dass** die Verriegelungshebel (8) auf ihrem der in die Aussparungen (18) eingreifenden Seite abgewandten Ende mit einer begrenzten drehbar angeordneten Verstellscheibe (10) der Verriegelungseinrichtung (7) zusammenwirken.

3. Verschlussdeckel nach zumindest einem der vorstehenden Ansprüche, **dadurch gekennzeichnet, dass** die Verstellscheibe (10) über einen Gelenkbolzen (11) mit dem Betätigungselement (12) der Verriegelungseinrichtung (7) verbunden ist.

4. Verschlussdeckel nach zumindest einem der vorstehenden Ansprüche, **dadurch gekennzeichnet, dass** die Verriegelungselemente (7) auf der dem Behälterinneren zugewandten Seite des Deckels (3) angeordnet sind.

5. Verschlussdeckel nach zumindest einem der vorstehenden Ansprüche, **dadurch gekennzeichnet, dass** das Betätigungselement (12) an einer an dem Außenrand (13) des Deckels (3) sich befindlichen Führungskante (14) in umgreifender Weise geführt ist.

6. Verschlussdeckel nach zumindest einem der vorstehenden Ansprüche, **dadurch gekennzeichnet, dass** an den mit der Verstellscheibe (10) zusammenwirkenden Enden der Verriegelungshebel (8) ein bolzenartiges Ansatzelement (17) auf der der Verstellscheibe (10) zugewandten Seite angeordnet ist, dass das jeweilige bolzenartige Ansatzelement (17) in eine in der Verstellscheibe (10) angeordnete längliche Betätigungsaussparung (16) eingreift.

7. Verschlussdeckel nach zumindest einem der vorstehenden Ansprüche, **dadurch gekennzeichnet, dass** die Verriegelungseinrichtung (7) eine Schwenkeinrichtung (12) (8) zur Betätigung der als Verriegelungshebel ausgebildeten Verriegelungselemente (7) aufweist.
